(19) Europäisches Patentamt
European Patent Office
Office européen des brevets

(11) **EP 2 345 335 A1**

(12) **EUROPEAN PATENT APPLICATION**

(43) Date of publication:
**20.07.2011 Bulletin 2011/29**

(51) Int Cl.:
***A23L 1/236*** *(2006.01)*

(21) Application number: **11003583.9**

(22) Date of filing: **26.09.2007**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.10.2006 US 542799**

(62) Document number(s) of the earlier application(s) in accordance with Art. 76 EPC:
**07843196.2 / 2 068 651**

(71) Applicant: **PepsiCo, Inc.**
**Purchase,**
**New York 10577 (US)**

(72) Inventors:
• **Lee, Thomas**
**Scarsdale**
**NY 10583 (US)**

• **Chang, Hyung**
**White Plains**
**NY 10603 (US)**
• **Honovich, Marinela**
**Whitestone**
**NY 11357 (US)**

(74) Representative: **Duxbury, Stephen et al**
**Arnold & Siedsma**
**Pettenkoferstrasse 37**
**80336 München (DE)**

Remarks:
This application was filed on 02-05-2011 as a divisional application to the application mentioned under INID code 62.

(54) **Calorie reduced beverages employing a blend of neotame and acesulfame-K**

(57) A low calorie sweetener for food products which avoids the off-taste of conventional substitute sweeteners. The low calorie sweetener includes an effective amount of artificial sweetener of neotame and a secondary substitute sweetener, preferably acesulfame-K. The artificial sweetener having, for example, about 75:25 - 95:5 of neotame and acesulfame-K has been found effective to avoid off-taste of conventional sweeteners.

EP 2 345 335 A1

**Description**

FIELD OF THE INVENTION

The present invention relates generally to sweeteners, and more particularly, to reduced calorie sweeteners.

BACKGROUND OF THE INVENTION

The use of sweeteners in food is a norm in everyday life. Sweeteners are used, for example, in baked goods, beverages, desserts and snacks, among other foods. Nutritive sweeteners such as sugars are a significant source of calories. High caloric intake has been associated with various concerns, such as weight gain, leading to health problems. As consumers are more health and wellness conscious, the calorie contents of foods have been a significant consideration. Particularly, high calorie foods have been shunned by consumers who are concerned with their wellness.

Food manufacturers, to appease health and wellness conscious consumers, have marketed foods with lower calorie contents by using sugar substitutes. A significant market exists for low calorie foods. However, low calorie foods tend to be disasteful, due to off-taste or bitter or tart aftertaste from the sugar substitute. Furthermore, due to the lack of sugar solid content, good mouthfeel or body as compared to non-low calorie food is absent. This is particularly true with low calorie beverages.

From the foregoing discussion, it is desirable to provide a low calorie sweetener which does not have negative characteristics of conventional low calorie sweeteners.

SUMMARY OF THE INVENTION

The invention relates to a low calorie sweetener for food products. The low calorie sweetener includes an artificial sweetener having an effective amount of primary 15 substitute sweetener comprising neotame and a secondary substitute sweetener. The low calorie sweetener avoids off-taste associated with conventional substitute sweeteners. In one embodiment, the low calorie sweetener includes effective amounts of nutritive sweetener and artificial sweetener. The amount of artificial sweetener imparts about 25-50%, preferably about 30%, of the total sweetness of the low calorie sweetener. The ratio of neotame and secondary substitute sweetener in artificial sweetener is about 75:25 to 95:5, preferably about 90:10. The secondary substitute sweetener is preferable acesulfame-potassium. This has been found to be effective in avoiding off-taste while maintaining substantially the texture of nutritive sweeteners. The low calorie sweetener is adapted for use in food products and beverage products. The beverage products include carbonated and noncarbonated beverages. The carbonated beverages include, but are not limited to cola, lemon-lime flavored beverages, fruit-flavored beverages, fountain beverages, and frozen carbonated beverages. The noncarbonated beverages include, but are not limited to juice, juice beverages, tea, flavored water, sports drinks, energy drinks and dairy beverages. Beverages also included, but are not limited to powdered beverages. Foods can include, but are not limited to ready-to-eat cereal, hot and cold cereal, pudding, and jellied or gelatin based products. The invention also relates to a method of providing a low calorie sweetener for food including adding the low calorie sweetener including a primary substitute sweetener including neotame and a secondary substitute sweetener, wherein the low calorie sweetener avoids off-taste in the food compared to conventional artificial sweeteners.

DETAILED DESCRIPTION OF THE INVENTION

The present invention relates to low calorie sweeteners. The low calorie sweetener comprises a nutritive sweetener and an artificial sweetener. The artificial sweetener comprises a primary substitute or synthetic sweetener (PSS) and a secondary substitute or synthetic sweetener (SSS). In one embodiment, PSS comprises neotame, or modified neotame which includes acesulfame-neotame, calcium-neotame salt, neotame-betacyclodextrin, neotame-phosphate salt, potassium-neotame, saccharin-neotame, or a combination of neotame and one or more modified neotame. Preferably, PSS comprises neotame. The chemical name for neotame is N-[N-(3,3-dimethylbutyl)- L-a-aspartyl]-L-phenylalanine 1-methyl ester. As for SSS, it can include acesulfame-potassium (acesulfame-K), alitame, aspartame, cyclamate, saccharin, sucralose, thaumatin or a combination thereof Other types of substitute or synthetic sweeteners or combinations of synthetic sweeteners are also useful. Preferably, SSS comprises acesulfame-K.

An effective amount of PSS and SSS is provided to substitute a portion of the sweetener composition to produce a low calorie sweetener which substantially tastes like full calorie nutritive sweeteners. Nutritive sweeteners, for example, include inulin, dextrose, fructose, high fructose corn syrup (HFCS), glucose, lactose, ribose, xylose, maltose or sucrose. In one embodiment, the ratio of *PSS* to SSS (PSS:SSS) in the low calorie sweetener is such that PSS is substantially greater than SSS (PSS SSS). Unless otherwise indicated, the ratio is based on the sweetness contributions of PSS and SSS for the desired sweetness (DS) of the low calorie sweetener, not the weight from various components of the sweetener. Sweetness contribution refers to the percentage IS of sweetness (in a product) that an individual sweetener contributes to the total sweetness. Providing a low calorie sweetener in which PSS SSS has been found to unexpectedly produce a taste which is substantially similar to that of nutritive sweeteners.

In one embodiment, the low calorie sweetener comprises a ratio of PSS:SSS which is about 75:25 - 95:5. Other ratios of *PSS: SSS* equal to about 75:25 - 90:10, 80:20 - 95:5 and 80:20 - 90:10 have also been found effective. Preferably, the low calorie sweetener comprises a ratio of PSS:SSS equal to about 90:10. In one embodiment, the low calorie sweetener comprises a ratio of neotame:acesulfame-K which is about 75:25 - 95:5. Other ratios of neotame:acesulfame-K equal to about 75:25 - 90:10, 80:20 - 95:5 and 80:20 - 90:10 have also been found effective. Preferably, the low calorie sweetener comprises a ratio of neotame: acesulfame-K equal to about 90:10.

In another embodiment, the low calorie sweetener 10 comprises an effective amount of nutritive sweetener (NS) and artificial sweetener (AS), wherein AS comprises PSS and SSS, to produce a low calorie sweetener which substantially tastes and feel like full calorie nutritive sweeteners. The DS is equal to the total sweetness imparted by both NS and AS. The sweetness imparted by NS in the low calorie sweetener is greater than the sweetness imparted by AS (NS > AS). In one embodiment, NS imparts from 50-75% of the total sweetness of the low calorie sweetener. Preferably, NS contributes 70% of the sweetness of the low calorie sweetener. With respect to AS, the ratio of PSS: SSS is selected to provide PSS which is substantially greater than SSS in terms of sweetness contribution. Providing a low calorie sweetener in which NS > AS and PSS » SSS in the AS has been found to unexpectedly produce a taste and feel which is substantially similar to that of full calorie nutritive sweeteners.

In one embodiment, AS comprises a ratio of PSS:SSS 5 equal about to 75:25 - 95:5. Other ratios of PSS:SSS equal to about 75:25 - 80:20 - 95:5 and 80:20 - 90:10 have also been found effective. Preferably, AS comprises a ratio of PSS:SSS equal to about 90:10. In one embodiment, AS comprises a ratio of neotame:acesulfame-K which is about 75:25 - 95:5. Other ratios of neotame:acesulfame-K equal to about 75:25 - 90:10,80:20 - 95:5 and 80:20 - 90:10 have also been found effective. Preferably, AS comprises a ratio of neotame:acesulfame-K equal to about 90:10.

The low calorie sweetener has been effective in reducing calories of the food while avoiding off-taste and maintaining good mouthfeel. The amount of calorie reduction is directly related to the amount of nutritive sweeteners that is replaced by artificial sweeteners. In one embodiment, the percentage of calorie reduction in the food product is equal to about the percentage that the nutritive sweetener is replaced by artificial sweetener. For example, if 20% of the nutritive sweetener is replaced by artificial sweetener (e.g., low calorie sweetener with 80% NS and 20% AS), then a 20% calorie reduction is achieved.

As discussed, ratios are based on sweetness contribution, not the weight from various components of the sweetener. Weights (W) of the various components of the low calorie sweetener (LCS) can be calculated by equation 1 as follows:

$$W_{LCS} = W_{NS} + W_{AS} \qquad\qquad \text{(equation 1)}$$

AS = nutritive sweetener
AS = artificial sweetener
When $W_{AS}= 0$, $W_{Lcs} = W_{NS} = TW$
TW = weight of the sweetener composition if it were made up entirely of NS

The amount of nutritive sweetener (NS) (i.e., full calorie) and artificial sweetener (AS) can be expressed by equations 2 and 3.

$$W_{NS} = (PER_{NS} * TW) \qquad\qquad \text{(equation 2)}$$

$$W_{AS} = (PER_{AS} * TW) [(PER_{PSS}/SW_{PSS}) + (PER_{SSS}/SW_{SSS})] \qquad \text{(equation 3)}$$

PER = percentage of respective component ofLCS
SW = sweetening power of the respective
component, expressed as X times the sweetness of sugar

As expressed above, secondary substitute sweetener (SSS) is based on being a single component SSS. The equation can easily be adapted to include SSS having multiple components. Substituting equations 2 and 3 into equation 1 gives the following equation:

$$W_{LCS} = (PER_{NS} * TW) + [(PER_{AS} * TW) [(PER_{PSS}/SW_{PSS}) + PER_{SSS}/SW_{SSS})]]$$

The following example illustrates the use of the above equation. The example is to replace 1000g of nutritive sweetener with 30% artificial sweetener having 90:10 ratio of neotame and acesulfame-K. Neotame is about 8000 times sweeter than sugar while acesulfame-K is about 200 times.

$$W_{LCS} = 0.7(1000g) + 0.3(1000g) [(0.9/8000) + (0.1/200)]$$

$\rightarrow$ nutritive sweetener = 700g

$\rightarrow$ neotame = 0.03375g

$\rightarrow$ acesulfame-K = 0.15 g

Another example is provided to further illustrate the determination of the corresponding weights of each component of the LCS. A beverage is sweetened by a 10% (wt/vol) of nutritive sweetener, such as sugar or high fructose com syrup (HFCS). The nutritive sweetener of the beverage is to be substituted by a LCS. The sweetness of the beverage will be derived from 70% nutritive sweetener and 30% from artificial sweetener containing 90:10 neotame and acesulfame-K blend.

$$W_{LCS} = (0.7 \times 10\%) + (0.3 \times 10\%) [(0.9/8000) + 0.1/200)]$$

$\rightarrow$ nutritive sweetener = 7%

$\rightarrow$ neotame = 0.0003375% or 3.375 ppm

$\rightarrow$ acesulfame-K = 0.0015% or 15 ppm

The low calorie sweetener in accordance with the invention can be provided in various forms. For example, the low calorie sweetener can be provided in dry form and used as a replacement for sugar. Providing the low calorie sweetener in other forms, such the forms in which nutritive sweeteners are provided, is also useful. In one embodiment, the low calorie sweetener is packaged, enabling easy sugar replacement. The low calorie sweetener, for example, can be bulk packaged such as in 5 lbs, 10 lbs containers. Other container sizes are also useful. Providing the low calorie sweeteners in individual servings, such as tablespoon size, is also useful.

The low calorie sweetener can be used in various types 20 of food products. In one embodiment, the low calorie sweetener is used as a sugar replacement in various types of food products, such as snacks, cakes, or beverages. Other types of food products are also useful. The low calorie sweetener provides an effective substitute for normal sugars, maintaining good mouthfeel while avoiding off-taste of conventional sugar substitutes.

In one embodiment, the low calorie sweetener is used 5 in beverages. The low calorie sweetener is used to replace sugars in beverages, such as commercially available beverages. Various types of beverages, for example, carbonated, non-carbonated, isotonic, cola, lemon-lime flavored beverages, fruit-flavored beverages, fountain beverages, and frozen carbonated beverages, juice, juice beverages, tea, flavored water, sports drinks, energy drinks and dairy beverages can include the low calorie sweetener. Other types of beverages are also useful. The beverage can be provided in ready-to-drink form. Other forms, such as dry powder or liquid concentrates which are mixed with a liquid for drinking or gels, capsules, or tablets which are consumed with liquid, are also useful.

EXPERIMENT

An experiment was conducted to test the effectiveness of the low calorie sweetener in accordance with one embodiment of the invention. The experiment comprises preparing three different flavored beverages, as listed in Tables 1-3. Each flavor includes four variations, a control variation having a nutritive sweetener and three test variations. The test variations have the following sweeteners:

a) 70% nutritive sweetener; and

b) 30% artificial sweetener, where artificial sweetener having different ratios ofneotame and acesulfame-K.

The ingredients of the beverages are listed in Tables 1-3. The ingredients, other than the treated water, were formed into a syrup. The syrup is then mixed with treated water in the amounts listed. Processing details are listed in the respective tables.

**Table 1 (Lemon Lime Flavor)**

| Ingredient (in grams) | Control | Variant 1 NTM/ASK 90:10 | Variant 2 NTM/ASK 75:25 | Variant 3 NTM/ASK 50:50 |
|---|---|---|---|---|
| HFCS | 854 | 598 | 598 | 598 |
| Potassium benzoate | 1.6 | 1.6 | 1.6 | 1.6 |
| EDTA | 0.2 | 0.2 | 0.2 | 0.2 |
| Potassium citrate | 1.2 | 1.2 | 1.2 | 1.2 |
| Citric acid | 8.4 | 8.4 | 8.4 | 8.4 |
| Lemon-lime flavor | 9 | 9 | 9 | 9 |
| Neotame (NTM) | 0 | 0.022 | 0.018 | 0.012 |
| Acesulfame-K (ASK) | 0 | 0.096 | 0.241 | 0.482 |
| * Processing: Ingredients were added in sequence to approximately 0.8 liter treated water with stirring. Treated water was added until the syrup was one liter in volume. The 50 ml portion of the syrup was added respectively to 250 ml portions of carbonated water, i.e., a one-plus-five "throw" to obtain finished lemon-lime drinks. The drink was sealed, shaken several times and aged at room temperature for two weeks. | | | | |

**Table 2 (Cola)**

| Ingredient (in grams) | Control | Variant 1 NTM/ASK 90:10 | Variant 2 NTM/ASK 75:25 | Variant 3 NTM/ASK 50:50 |
|---|---|---|---|---|
| HFCS | 901 | 631 | 631 | 631 |
| Caffeine | 0.64 | 0.64 | 0.64 | 0.64 |
| Phosphoric acid | 2.8 | 2.8 | 2.8 | 2.8 |
| Cola flavor | 13.9 | 13.9 | 13.9 | 13.9 |
| Neotame (NTM) | 0 | 0.0228 | 0.019 | 0.0127 |
| Acesulfame-K (ASK) | 0 | 0.1015 | 0.2538 | 0.5076 |
| * Processing: Similar to the one recited in Example 1 except beverage was aged at room temperature for four weeks. | | | | |

**Table 3 (Tea)**

| Ingredient (in grams) | Control | Variant 1 NTM/ASK 90:10 | Variant 2 NTM/ASK 75:25 | Variant 3 NTM/ASK 50:50 |
|---|---|---|---|---|
| HFCS | 615 | 430 | 430 | 430 |
| Tea solids | 7.43 | 7.43 | 7.43 | 7.43 |
| Citrus pectin | 1.85 | 1.85 | 1.85 | 1.85 |
| Citric acid | 9.98 | 9.98 | 9.98 | 9.98 |
| Tea flavor | 6.17 | 6.17 | 6.17 | 6.17 |
| Neotame (NTM) | 0 | 0.016 | 0.014 | 0.009 |
| Acesulfame-K (ASK) | 0 | 0.072 | 0.18 | 0.36 |

\* Processing:
Ingredients were added in sequence with stirring to approximately 3 liters of treated water. Treated water was added until 6 liters in volume and bottled.

The bottled beverages were evaluated by a total of 48 panelists. Each panelist was given 5 samples, one known control (i.e., full calorie), one blind control and 3 variants. The panelists were asked to rank the samples based on closeness to the known control. The results were subjected to a statistic R-index analysis, which measures the probability of distinguishing test sample from the control. Action standard is no difference at a 95% confidence level. All three flavored beverages with 90:10 ratio blend of neotame:acesulfame-K met the action standard. The 75:25 blend sample of lemon-lime and cola also met the action standard. As for the rest of the samples, they failed to meet the action standard and were determined to be significantly different from their respective controls.

**Table 4 (Discrimination Testing)**

| Application | Variant 1 NTM/ASK 90:10 | Varian 2 NTM/ASK 75:25 | Variant 2 NTM/ASK 50:50 |
|---|---|---|---|
| **Lemon Lime Flavor** | ☑ | ☑ | ☒ |
| **Cola** | ☑ | ☑ | ☒ |
| **Tea** | ☑ | ☒ | ☒ |

☑ = Meet Action Standard

☒ = Do not meet Action Standard

While the invention has been particularly shown and described with reference to various embodiments, it will be recognized by those skilled in the art that modifications and changes may be made to the present invention without departing from the spirit and scope thereof. The scope of the invention should therefore be determined not with reference to the above description but with reference to the appended claims along with their full scope of equivalents.

**Claims**

1. A low calorie sweetener for food products comprising: an effective amount of nutritive sweetener and an artificial sweetener including an effective amount of primary substitute sweetener comprising neotame and a secondary substitute sweetener, wherein the low calorie sweetener imparts a taste that is not significantly different from the taste imparted by the full calorie sweetener.

2. The low calorie sweetener of claim 1 wherein the secondary substitute sweetener comprises acesulfame-K, or wherein the secondary substitute sweetener comprises acesulfame-K and at least one other artificial sweetener.

3. The low calorie sweetener of claim 1 wherein the amount of nutritive sweetener is about 50-75% by weight, preferably wherein the secondary substitute sweetener comprises acesulfame-K, or wherein the secondary substitute sweetener comprises acesulfame-K and at least one other artificial sweetener.

4. The low calorie sweetener of claim 1 wherein the amount of nutritive sweetener is about 70% by weight, preferably wherein the secondary substitute sweetener comprises acesulfame-K, or wherein the secondary substitute sweetener comprises acesulfame-K and at least one other artificial sweetener.

5. The low calorie sweetener of claim 1 adapted for use as a substitute for a nutritive sweetener in food products, preferably wherein the ratio of neotame and secondary substitute sweetener is about 75:25 - 95:5 based on their sweetness contribution, or wherein the ratio of neotame and secondary substitute sweetener is about 90:10 based on their sweetness contribution.

6. The low calorie sweetener of claim 1 adapted for use as a substitute for a nutritive sweetener in beverage products.

7. The low calorie sweetener of claim 6 wherein the ratio of neotame and secondary substitute sweetener is about 75: 25 - 95:5 based on their sweetness contribution, or wherein the ratio of neotame and secondary substitute sweetener is about 90:10 based on their sweetness contribution.

8. The low calorie sweetener of claim 1 wherein the ratio of neotame and secondary substitute sweetener is about 2075:25 - 95:5 based on their sweetness contribution, or wherein the ratio of neotame and secondary substitute sweetener is about 90:10 based on their sweetness contribution, preferably wherein the secondary substitute sweetener comprises acesulfame-K.

9. The low calorie sweetener of claim 6 wherein the beverage products comprise carbonated beverages, or wherein the beverage products comprise noncarbonated beverages, or wherein the beverage products comprise tea, or wherein the beverage products comprise cola, or wherein the beverage products comprise lemon-lime flavored beverages.

10. The low calorie sweetener of claim 6 wherein the beverage products are selected from the group comprising fruit-flavored beverages, fountain beverages, frozen carbonated beverages, juice, juice beverages, flavored water, sports drinks, energy drinks and dairy beverages.

11. A method of providing a low calorie sweetener for food comprising adding the low calorie sweetener including a primary substitute sweetener comprising neotame and a secondary substitute sweetener, wherein the low calorie sweetener imparts a taste that is not significantly different from the taste imparted by the full calorie sweetener.

Europäisches
Patentamt

European
Patent Office

Office européen
des brevets

# EUROPEAN SEARCH REPORT

**Application Number**

EP 11 00 3583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/004636 A (NUTRINOVA GMBH [DE]; RATHJEN SUSANNE [DE]) 20 January 2005 (2005-01-20) * abstract * * page 8, paragraph 4; claims 8,9; example 4 * | 1-11 | INV. A23L1/236 |
| X | WO 2006/027796 A (PHARMED MEDICARE PTY LTD [IN]; RATNAM RAKESH [IN]; AURORA SUNEET [IN];) 16 March 2006 (2006-03-16) * page 9, line 12 - line 17; example 1 * | 1-11 | |
| X,P | WO 2007/027984 A (SWEETENER SOLUTIONS LLC [US]; COFFIELD JOSEPH M [US]; CURRY JOHN E [US] 8 March 2007 (2007-03-08) * table 1 * | 1,2,11 | |
| A | WO 99/30576 A (NUTRASWEET CO [US]) 24 June 1999 (1999-06-24) * claims 1,4,5 * | 1-11 | |
| A | WO 00/43416 A (NUTRASWEET CO [US]) 27 July 2000 (2000-07-27) * claims 1,2 * | 1-11 | TECHNICAL FIELDS SEARCHED (IPC) A23L |

The present search report has been drawn up for all claims

| Place of search | Date of completion of the search | Examiner |
|---|---|---|
| The Hague | 9 June 2011 | Saunders, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 00 3583

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2011

| Patent document cited in search report | | Publication date | Patent family member(s) | | Publication date |
|---|---|---|---|---|---|
| WO 2005004636 | A | 20-01-2005 | BR | PI0412588 A | 19-09-2006 |
| | | | CA | 2532426 A1 | 20-01-2005 |
| | | | EP | 1653812 A2 | 10-05-2006 |
| | | | MX | PA06000537 A | 30-03-2006 |
| | | | US | 2006134291 A1 | 22-06-2006 |
| | | | US | 2008050508 A1 | 28-02-2008 |
| WO 2006027796 | A | 16-03-2006 | AT | 458409 T | 15-03-2010 |
| | | | AU | 2005281300 A1 | 16-03-2006 |
| | | | BR | PI0513670 A | 13-05-2008 |
| | | | EP | 1791442 A2 | 06-06-2007 |
| | | | HK | 1105273 A1 | 09-07-2010 |
| | | | US | 2009175997 A1 | 09-07-2009 |
| WO 2007027984 | A | 08-03-2007 | NONE | | |
| WO 9930576 | A | 24-06-1999 | AU | 1924799 A | 05-07-1999 |
| | | | CO | 5040052 A1 | 29-05-2001 |
| WO 0043416 | A | 27-07-2000 | AU | 2417100 A | 07-08-2000 |
| | | | US | 6048999 A | 11-04-2000 |

EPO FORM P0459

For more details about this annex : see Official Journal of the European Patent Office, No. 12/82